# FASCICULE DE BREVET EUROPEEN

(11) **EP 1 518 314 B1**
(45) Date de publication et mention de la délivrance du brevet: **30.08.2017**
(21) Numéro de dépôt: 03750788.6
(22) Date de dépôt: 01.07.2003
(51) Int. Cl.: H02K 41/03

(54) **ACTIONNEUR OU GÉNÉRATEUR LINÉAIRE À TIGES**
MIT STANGEN VERSEHENER AKTUATOR ODER LINEARGENERATOR
LINEAR ACTUATOR OR GENERATOR WITH RODS

(30) Priorité: 01.07.2002 FR 0208194
(43) Date de publication de la demande: 30.03.2005
(73) Titulaire: CENTRE NATIONAL DE LA RECHERCHE SCIENTIFIQUE -CNRS-, 75016 Paris (FR)
(72) Inventeur: BEN AHMED, Abdel, Hamid, F-35200 Rennes (FR); MULTON, Bernard, F-35200 Rennes (FR); CAVAREC, Pierre-Emmanuel, F-35310 MORDELLES (FR); ANTUNES MENOITA, Marc, F-35170 Bruz (FR)
(74) Mandataire: Regimbeau
(86) Numéro de dépôt international: PCT/FR2003/002034
(87) Numéro de publication internationale: WO 2004/004102

(56) Documents cités:
- EP-A- 0 218 522
- EP-A- 1 134 444
- US-A- 3 697 979
- US-A- 5 081 381

## Description

L'invention concerne les actionneurs ou générateurs électriques et notamment ces derniers lorsqu'ils visent à fournir ou accepter une très haute densité d'efforts, c'est à dire une force élevée pour un volume faible.

De manière générale, un entraînement mécanique nécessite souvent l'obtention d'une force de poussée élevée sans systèmes lourds ni volumineux.

Il en est ainsi dans les appareils de transport (avions, trains).

Par exemple, la plateforme d'inclinaison variable d'un train pendulaire est actionnée par des vérins devant répondre à ces exigences. De même, la compensation active des vibrations dans tout type d'appareil de transport nécessite l'utilisation de vérins puissants bien que de petite taille mais également à hautes performances dynamiques.

Dans les applications habituelles des actionneurs à haute densité d'effort, on utilise des vérins hydrauliques ou pneumatiques, ou encore des actionneurs électriques tournants nécessitant une transformation de mouvements du type rotation/translation (typiquement à l'aide d'un montage vis-écrou).

Avec les actionneurs linéaires électriques directs (sans conversion de mouvement rotation-translation), en rapportant la force générée au volume utilisé, on relève typiquement une force volumique de 300 N/litre. De telles densités d'effort restent souvent trop faibles.

De plus, les différents actionneurs électriques indirects ou les vérins, proposés jusqu'ici, ont des inconvénients importants parmi lesquels : des limitations de bande-passante mécanique et de contrôlabilité, des contraintes mécaniques importantes d'usure et de bruit, la nécessité d'une alimentation en fluide sous pression avec la complexité qui est inhérente à une telle alimentation, et plus généralement un rendement énergétique global faible.

Dans le domaine des actionneurs électriques, on a certes déjà proposé d'accroître les surfaces d'entrefers, interfaces magnétiques entre partie fixes et mobiles.

Toutefois, dans de tels actionneurs, appelés typiquement polyentrefers à bobinage global, les parties mobiles se sont avérées, présenter une résistance mécanique particulièrement faible de par leur faible section et les difficultés de guidage se sont révélées très difficiles à surmonter. Le document "EP 0218 522 A" divulgue une machine électrique formant actionneur ou générateur selon le préambule de la revendication 1. La présente invention se donne pour but principal de résoudre les inconvénients des techniques connues, c'est à dire de proposer un actionneur électrique à éléments mobiles multiples, qui montre une densité volumique d'effort particulièrement importante, tout en ayant une fiabilité mécanique élevée notamment en facilitant les guidages mécaniques.

Ce but est atteint selon l'invention grâce à une machine électrique formant actionneur ou générateur, comprenant une partie active à une ou plusieurs phases destinée à être reliée à une source ou à une charge électrique, et une partie passive, ces deux parties étant mobiles l'une par rapport à l'autre, la partie active comprenant un bobinage solénoïdal global pour chaque phase et comprenant, à l'intérieur de ce ou ces bobinages, un empilage de parties ferromagnétiques ou amagnétiques et de parties aimantées, les parties aimantées ayant des directions d'aimantation parallèles au sens de déplacement relatif et des sens d'aimantation opposés successivement l'un à l'autre, les parties ferromagnétiques ou amagnétiques de cet empilage étant munies de passages traversés chacun par au moins un élément en coulissement relatif par rapport à la partie active, ce ou ces éléments coulissants constituant la partie passive, chaque élément coulissant incluant une succession de portions alternativement magnétiques et amagnétiques prévues pour se trouver les unes après les autres en vis à vis des différentes parties aimantées ou non de l'empilage, de sorte qu'un flux magnétique alternatif soit alors généré dans le bobinage de chaque phase, caractérisé en ce que les passages formés dans les parties ferromagnétiques ou amagnétiques de l'empilage forment des orifices dont la section interne entoure à chaque fois un élément coulissant, et en ce que les éléments coulissants sont des tiges ayant chacune un pourtour externe complémentaire de la section interne des orifices traversés, de sorte que chaque tige vient en interaction magnétique avec la partie ferromagnétique ou amagnétique traversée par l'ensemble de son pourtour externe.

D'autres caractéristiques, buts et avantages de l'invention apparaîtront à la lecture de la description détaillée qui va suivre, faite en référence aux figures annexées sur lesquelles :
- les figures 1 et 2 sont des coupes longitudinales partielles du dispositif, illustrant deux positions successives de ce dernier, appelées respectivement conjonction positive et conjonction négative.
- la figure 2bis est une vue détaillée d'un motif élémentaire d'une partie alimentée de la machine électrique des figures 1 et 2 ;
- la figure 3 est une vue générale en perspective coupée d'une machine électrique selon l'invention ;
- la figure 4 est une vue éclatée d'une portion d'élément mobile d'une machine électrique selon l'invention ;
- la figure 5 est une vue éclatée d'une portion de partie active de la machine électrique selon l'invention ;
- les figures 6 et 7 représentent schématiquement une machine électrique selon l'invention, dans des positionnements respectifs où les efforts produits sont de sens opposés l'un à i'autre ;
- la figure 8 est une vue en perspective coupée d'un capteur de position selon un mode de réalisation préféré de l'invention ;
- la figure 9 est une vue éclatée de ce même capteur ;
- la figure 10 est une vue générale d'une machine électrique selon l'invention illustrant le positionnement d'un support de capteur des figures 8 et 9;
- la figure 11 est une vue d'un support de capteur selon un mode de réalisation de l'invention ;
- la figure 12 est un tracé illustrant la variation de l'inductance magnétique du bobinage primaire d'un tel capteur en fonction de la position d'un élément mobile correspondant ;
- la figure 13 est un schéma électrique d'un dispositif de mesure différentiel traitant et analysant les signaux de sortie de trois tels capteurs.

Le présent dispositif est naturellement réversible pourvu que la charge et la source le soient également.

Un fonctionnement moteur est relatif à une conversion électromécanique entre une source et une charge, la première étant de nature électrique (on parle alors d'alimentation électrique de puissance) et la seconde de nature mécanique (on parle alors de charge entraînée). Dans un fonctionnement générateur, la source est de nature mécanique (source mécanique entraînante) et la charge est de nature électrique absorbant de la puissance électrique.

D'autre part, le dispositif comporte deux parties : une partie comportant les bobinages électriques et des aimants permanents et une partie complètement passive composée de tiges, l'une et l'autre pouvant être fixe ou mobile. On parlera donc de mouvement ou coulissement relatif pour qualifier l'ensemble des possibilités de mouvement relatif entre les deux parties.

Pour une plus grande simplicité de compréhension, nous prendrons le cas où la machine électrique est en fonctionnement moteur (ou actionneur) et la partie mobile correspond aux tiges. Les remarques et caractéristiques, qui seront mises en avant, seront donc tout aussi valables pour un fonctionnement générateur et/ou à partie passive fixe.

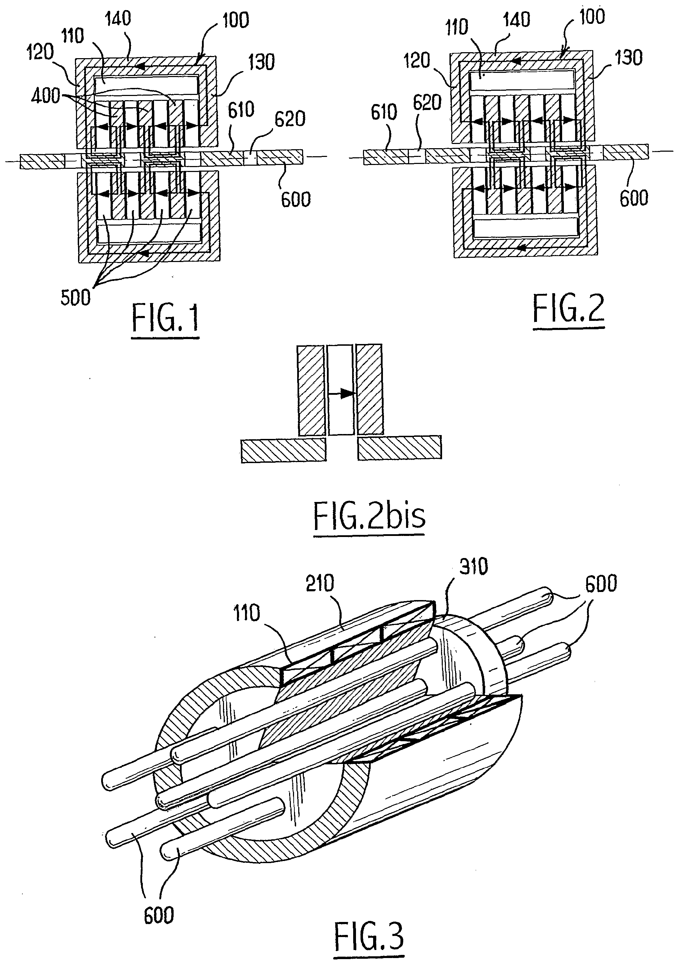

La machine électrique décrite ici est composée pour sa partie active alimentée d'un ou de plusieurs bobinages de puissance (bobinages 110, 210 et 310 sur la figure 3), dits bobinages induits. Ces bobinages sont de forme solénoïdale, et entourent complètement une zone de la partie alimentée ainsi que la partie passive.

La partie alimentée comporte, outre ces bobinages, un empilage de tôles magnétiques ou amagnétiques et d'aimants permanents 500.

La partie passive, quant à elle, est composée d'un ou de plusieurs éléments allongés 600, dont on décrira la forme par la suite.

A l'inverse des structures classiques (notamment à champs tournants), la technologie connue de « polyentrefers à bobinage global » permet de diminuer le pas de déplacement sans pour autant dégrader l'énergie convertie totale. Ceci permet donc, à volume total et à conditions thermiques et magnétiques donnés, d'accroître la force générée.

On vise ici à ce que la somme des surfaces entrefer, c'est à dire les surfaces actives externes des tiges, soit maximale en rapport au volume de l'actionneur considéré.

Pour cela, on propose dans le présent exemple de réalisation une série de tiges ayant chacune une périphérie circulaire, qui interagit avec chaque tôle ou partie ferromagnétique ou amagnétique par l'ensemble de son pourtour.

En d'autres termes, les flux magnétiques, véhiculés par les parties en tôle, sont appliqués à la tige par l'ensemble de son pourtour.

L'avantage principal de cette forme réside dans la précision de réalisation et ainsi la possibilité de faciliter les guidages mécaniques tout en permettant des entrefers faibles.

Une tige de section ovoïdale, ou plus généralement une tige entourée totalement par des zones ferromagnétiques ou amagnétiques, elles-mêmes en contact avec les aimants, serait également avantageuse pour générer une variation maximale de flux magnétique en rapport à l'étendue de la section de cette tige.

Pour réaliser des aimants 500 et parties magnétiques ou amagnétiques 400 qui entourent totalement la tige cylindrique 600 considérée, la partie alimentée est ici entre autre un ensemble composite constitué d'un empilage de tôles magnétiques ou amagnétiques et d'aimants permanents, et les aimants permanents entourent chaque tige de manière complémentaire à la périphérie de celle-ci.

Cet empilement est parallèle au déplacement de la tige et il est alterné le long de cette direction.

La distance définie par la somme des épaisseurs d'une tôle magnétique ou amagnétique 400 et de l'aimant suivant 500, correspond à un demi-pas de déplacement relatif d'une tige.

Plus précisément maintenant, telle que représentée sur la figure 3, la partie alimentée est composée de trois phases (q=3) identiques et décalées dans l'espace (dans le sens du déplacement) d'un nombre égal à N*pas/(2*q), N étant un entier.

Chaque phase est composée :
- d'un bobinage de puissance 110, 210, 310 (dit induit) de forme solénoïdale entourant la zone active de la partie alimentée ;
- d'un empilage de circuits magnétiques ou amagnétiques (tôles) 400 et d'aimants permanents 500 d'aimantation parallèle au déplacement. Cette partie comporte des trous circulaires où passent les parties mobiles 600 ;
- de circuits magnétiques de retour du flux : deux circuits d'extrémité 120, 130 et un circuit extérieur 140 de forme tubulaire, le tout enfermant les bobinages et la zone active.

La partie passive est quant à elle composée principalement de plusieurs tiges 600 parallèles se déplaçant relativement à travers la partie alimentée.

Les tiges 600 sont ici composites également et comportent une âme amagnétique sur laquelle est disposé un empilage de rondelles successivement magnétiques et amagnétiques, telles qu'on les décrira par la suite. Mais d'autres procédés de réalisation sont aussi envisageables pourvu que l'on obtienne l'alternance longitudinale adéquate magnétique-amagnétique.

Le principe de fonctionnement de la machine électrique est proche de celui des machines synchrones à aimants permanents.

De manière connue en soi, et notamment selon le principe connu des machines électriques synchrones, un déplacement des parties mobiles 600 générant au sein du bobinage de puissance un flux alternatif et par conséquent une force électromotrice (f.e.m.) alternative.

L'injection d'un courant alternatif, en synchronisme avec cette f.e.m., dans le bobinage (l'induit) engendre, selon la même logique, une puissance électromagnétique de valeur moyenne non nulle et donc une force motrice d'action sur les éléments mobiles et de réaction sur la partie fixe.

Il existe ainsi deux positions caractéristiques de la partie mobile, représentées aux figures 1 et 2 : une position de conjonction positive (figure 1) où le flux vu par le bobinage induit et généré par « les aimants actifs » 500 est arbitrairement positif et une position de conjonction négative (figure 2) où ce flux est négatif.

Les aimants 500 sont initialement positionnés pour que leurs sens d'orientation soient alternés.

De ce fait, un aimant 500 sur deux est inactif.

Le flux des aimants inactifs ne traverse pas le bobinage alimenté correspondant mais est court-circuité par la partie magnétique de la tige qui lui fait face.

La tige 600 est constituée d'éléments alternativement magnétiques et amagnétiques avec un pas de tige égal au double pas des aimants.

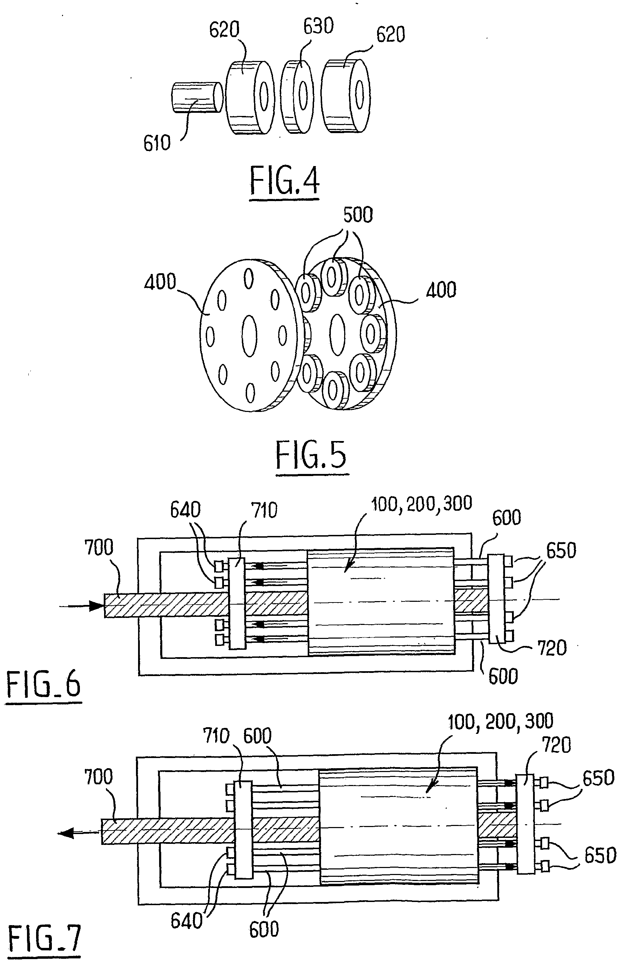

Tel que représenté sur la figure 5, chaque aimant 500 est un anneau de section interne conforme à la périphérie d'une tige qui le traverse mais ce n'est qu'une solution de réalisation parmi d'autres.

Chaque élément de base de l'empilage constituant la partie alimentée comprend donc :
- une paroi en tôle magnétique ou amagnétique 400 présentant une série d'orifices répartis au bord de sa périphérie ;
- et un ensemble d'anneaux-aimants 500 recouvrant chacun le bord d'un orifice correspondant.

L'ensemble des anneaux-aimants ainsi répartis constitue donc également l'entretoise aimantée qui sépare deux plaques de tôle magnétique ou amagnétique 400.

Selon une variante, on insère entre deux tôles magnétiques ou amagnétiques non pas des aimants de forme annulaire, mais un aimant unique de même forme que les tôles, c'est à dire un aimant ayant la forme d'une plaque percée de plusieurs orifices de passage pour chaque tige respective 600.

Telles que représentées sur la figure 4, les tiges 600 ont elles-mêmes ici une structure composite particulièrement avantageuse. Chaque tige consiste en un enfilage successif d'anneaux sur une âme centrale amagnétique.

Ainsi, un axe amagnétique 610 reçoit alternativement une bague magnétique 620 et une bague amagnétique 630, de même diamètre, formant au final une tige compacte, de structure magnétique appropriée et parfaitement complémentaire des orifices de tôle 400. Ces tiges sont donc, selon cette disposition avantageuse, chacune un empilement de pièces ferromagnétiques 610 et amagnétiques 620.

Dans une autre variante, elles peuvent également être monobloc avec des zones alternativement magnétiques et amagnétiques.

On notera que ce mode de réalisation permet, outre une très forte densité volumique d'effort, également une grande dynamique mécanique, c'est à dire une grande capacité d'accélération et une bande passante importante, et enfin une grande course de la machine.

La faible inertie des parties mobiles est particulièrement propice à cette dynamique mécanique, faible inertie due notamment au fait que la partie mobile est dans ce cas totalement passive, puisque la partie fixe comporte à la fois le bobinage de puissance et l'inducteur (ici les aimants permanents).

Le mode de fonctionnement selon le principe d'un actionneur synchrone à aimants permanents, à réluctance locale variable à champ longitudinal et à bobinage global est préféré selon l'invention.

Cette disposition particulière permet notamment d'obtenir des tiges totalement passives et par là de faible volume et de faible poids.

Grâce à la surface cylindrique des tiges, on multiplie les surfaces d'entrefer nécessaires pour obtenir des densités d'effort très élevées.

On notera également que la structure cylindrique des tiges permet additionnellement un usinage de précision, un assemblage et un guidage précis.

La structure cylindrique permet en outre un guidage par bandes de glissement particulièrement avantageux.

On notera en outre que le fait que l'induit entoure totalement la partie passive, (c'est à dire que le bobinage puisse être qualifié de « global ») permet également que le dispositif ait un volume compact.

Le présent dispositif comporte en outre un système de transmission d'effort réalisé de telle sorte que toutes les tiges 600 ne soient sollicitées qu'en traction, et ce quel que soit le sens de l'effort généré ce qui contribue à permettre la réalisation d'un dispositif très fractionné à grand nombre de tiges de faible section.

Sur les figures 6 et 7 est représenté un tel système de transmission d'effort selon une variante préférée.

On y distingue d'abord un axe 700 de transmission de l'effort résultant généré par l'actionneur. Cet axe 700 s'étend non seulement hors de la machine, mais traverse également l'ensemble de celle-ci.

Dans le présent mode de réalisation, l'axe 700 est muni solidairement de deux plaques d'appui 710 et 720 transversales à cet axe, plaques positionnées de part et d'autre de la partie active fixe.

C'est sur ces plaques 710, 720 que les tiges 600 viennent transmettre l'effort en vue de l'actionnement de l'axe principal 700.

Pour cela, chaque tige 600 traverse les deux plaques 710 et 720, et vient former, par delà chaque plaque et à l'opposé de la partie active, une tête 640, 650 l'empêchant d'être extraite de la plaque correspondante.

Lorsque l'effort transmis sur l'axe 700 est un effort de poussée, c'est à dire en direction de la charge actionnée, les têtes de tiges 640 qui sont adjacentes à la charge tendent à se décoller de la plaque 710 (cette tendance est symbolisée par un décollement sur les figures), tandis que les têtes 650 les plus éloignées de la charge viennent forcer en butée contre la plaque correspondante 720, et repoussent celle-ci en direction de la charge.

A contrario, lorsque l'effort sur l'axe 700 est un effort de traction, les têtes de tiges 650 qui sont les plus éloignées de la charge tendent à se décoller de leur plaque correspondante 720 (décollement symbolique sur les figures), et les tiges viennent par contre en traction côté charge par l'intermédiaire des têtes 640 appuyées, sur la plaque 710 plus proche de la charge.

Là encore, la transmission de l'effort sur l'axe 700 se fait seulement par traction dans les tiges 600. L'effort est transmis sur les têtes extrémales la seule plaque située du côté étiré de la tige.

Dans le présent exemple de réalisation, il n'existe aucun jeu sous les têtes de tige, vis-à-vis de la plaque considérée, de sorte que le soulagement de l'appui à une extrémité des tiges ne se traduit pas forcément par un décollement des têtes de tiges considérées.

Toutefois, selon une variante, les longueurs de tiges 600 peuvent être choisies légèrement supérieures à l'écartement entre les deux plaques 710 et 720, de sorte qu'il existe un léger jeu longitudinal entre la tête 640, 650 de chaque tige 600 considérée et chaque plaque de transmission d'effort 710, 720 correspondante.

Les tiges sont donc sollicitées uniquement en traction quel que soit le sens de l'effort, permet de soulager en contraintes mécaniques les tiges (et éviter les flambages). On peut alors diminuer l'étendue des sections des éléments mobiles, tiges ou autres, par rapport à un système classique de transmission. Ainsi, le nombre de tiges pouvant être disposé dans un même volume peut être élevé. La force volumique est alors accrue en conséquence.

En d'autres termes, les sollicitations des tiges en traction seulement permet l'adoption de tiges de section particulièrement fines, permettant un taux de fractionnement élevé et les avantages associés.

En outre, la présente machine est munie d'un capteur de position 800 qui est intégré à la structure et qui ne surdimensionne pas la machine, permettant ainsi de ne pas accroître le volume de l'ensemble. Ce capteur, fort appréciable pour l'autopilotage de la machine, est de type à réluctance variable. Cette technologie présente l'avantage d'une homogénéité avec celle de la machine contribuant ainsi à la possibilité de fonctionner en environnements difficiles.

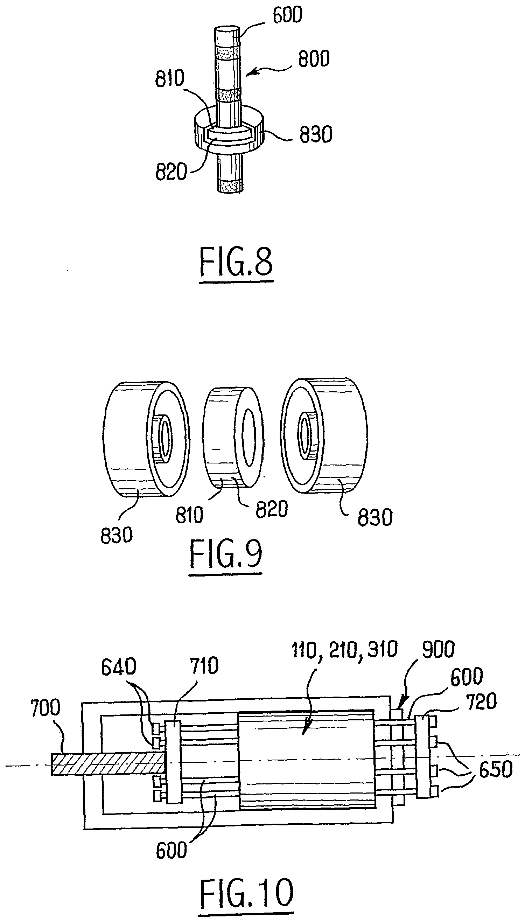

Il se compose d'un enroulement primaire d'excitation 810, et d'un enroulement secondaire de mesure 820. Tel que représenté sur les figures 8 et 9, ce capteur exploite la forme générale des tiges 600 décrites ci-dessus. Les deux enroulements 810 et 820 constituent en effet chacun un solénoïde annulaire, rassemblés ensemble dans un capot 830.

Le capot lui-même en forme d'anneau creux, et l'ensemble annulaire 800 ainsi formé présente un diamètre interne complémentaire du diamètre de la tige 600 lors qu'assemblée.

Le capteur 800 est enfilé autour de la tige dans une zone d'extrémité de l'actionneur, recevant la tige en coulissement lors du fonctionnement de l'actionneur.

La réluctance (donc l'inductance) du capteur 800 dépend de la position des tiges mobiles 600. L'injection d'un courant au primaire 810 du capteur, de fréquence et d'amplitude adéquates, engendre au secondaire 820 une force électromotrice dont le module dépend notamment de la valeur de l'inductance et par conséquent de la position de la tige 600.

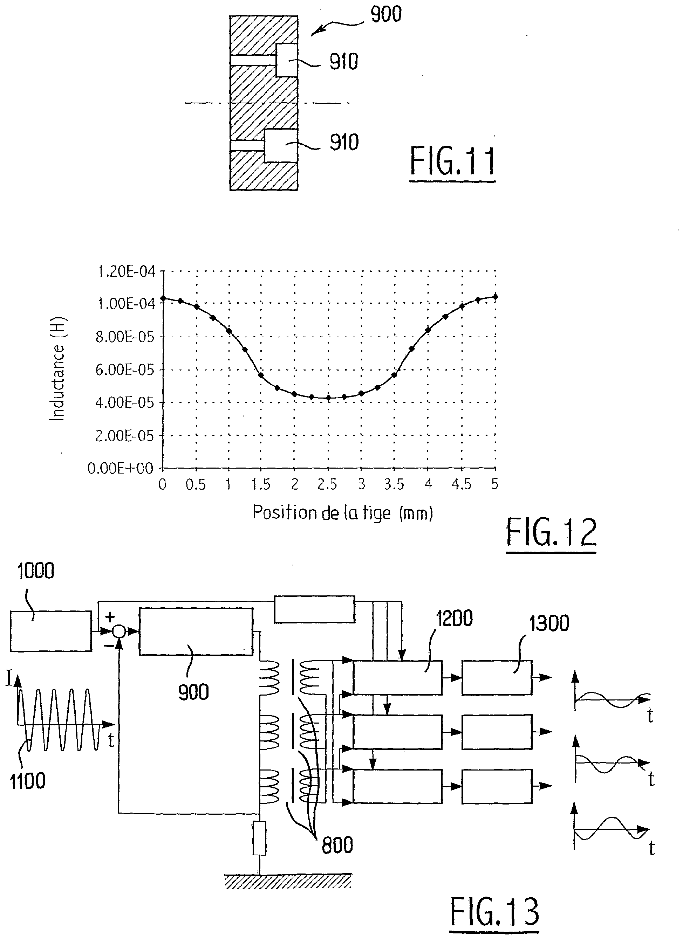

Ainsi, à partir d'un traitement adéquat électronique et/ou numérique de la mesure de la force électromotrice mesurée, (un exemple de dispositif de mesure différentielle est donné à la figure 13) on peut en extraire aisément l'information de position des tiges.

Dans sa version triphasée, l'actionneur comporte trois capteurs de position de ce type disposés à l'extrémité de l'actionneur sur trois tiges différentes et dédiés chacun au pilotage d'une des trois phases. Chaque capteur 800 est décalé dans le sens du déplacement des tiges d'un nombre égal à N*pas/(2*q), N étant un entier et q le nombre de phases.

A la figure 12, l'inductance vue par les bobinages 810 et 820 du capteur, en fonction de la position de la tige 600 qu'il entoure, présente sensiblement la forme d'une sinusoïde, de sorte que la prise en considération de cette inductance sinusoïdale en trois positions décalées selon le même décalage que les différentes phases, permet de déduire le positionnement précis de l'actionneur à chaque instant.

Pour positionner ainsi les trois capteurs, on propose un porte-capteur 900 tel que représenté sur la figure 11, constitué d'une plaque en matière amagnétique à trois passages traversants dans laquelle chacun des trois passages forme également une cavité 910 de réception de capteur, cavité 910 de profondeur plus ou moins, la profondeur de cavité correspondant au positionnement choisi pour le capteur. Les cavités présentent ici des différences de profondeur d'un tiers de pas de tige.

Sur le schéma de la figure 13, le dispositif de traitement différentiel des signaux délivrés par les capteurs 800 repose sur le principe d'une même alimentation en courant alternatif (fréquence d'excitation) de chacun des trois capteurs (les bobinages primaires des trois capteurs sont ainsi mis en série), alimentation obtenue par régulation en courant d'une alimentation réalisée par un correcteur 900, à partir du signal fourni par un générateur de sinus 1000 et par une alimentation alternative 1100. Le signal du générateur sinus est exploité pour démoduler (démodulateur synchrone 1200) le signal de sortie relevé sur un capteur 800 puis soumis à un filtre passe-bas respectif 1300, de manière à fournir, en sortie de chaque filtre passe-bas 1300 le signal de position dont la variation est parfaitement synchrone de la force électromotrice de la phase considérée (bobinage de puissance de la machine). La prise en considération de chacun de ces trois signaux sinusoïdaux permet de mesurer la position relative en temps réel de l'ensemble des tiges (partie passive) par rapport à chacune des trois phases (version triphasée).

Le capteur tel qu'ici décrit permet d'éviter des capteurs de position classiques, par exemple de type optico-magnétique qui limitent habituellement l'environnement d'utilisation, génèrent des pollutions, et augmentent le coût de l'ensemble.

Le fait que le capteur de position utilise les parties mobiles de l'actionneur est également un avantage en soi.

Dans sa version triphasée, l'actionneur est alimenté par un onduleur triphasé classique à 6 interrupteurs de puissance et ses trois phases sont de préférence couplées en étoile. Vu de l'onduleur son fonctionnement s'apparente à celui d'une machine synchrone classique à aimants permanents à la seule différence que les couplages magnétiques entre ses phases sont très faibles voire négligeables.

On aura noté à travers l'exposé ci-dessus, d'un mode de réalisation particulier, les nombreux avantages apportés par les diverses dispositions décrites.

Les essais réalisés sur cet actionneur ont montré qu'il peut fournir une force totale de 1270 N pour un courant efficace de 15 A.

L'intensité volumique d'effort correspondante est donc de 1,2 kN/litre, et il est même envisagé d'obtenir une densité de 2kN/litre en mode impulsionnel et selon la même configuration que celle décrite ici. La structure n'étant pas encore optimisée, des progrès importants restent possibles.

Outre les applications mentionnées en préambule de cette description, on pourrait également citer à titre illustratif, outre des applications de gouvernes d'avion, une application de l'entraînement mécanique de robots manipulateurs, par exemple dans l'industrie automobile.

A titre d'exemple toujours, d'autres applications, requérrant une grande bande passante mécanique, telles que la compensation active des vibrations dans la traction (véhicules urbains, trains à grande vitesse) sont également une application privilégiée.

## Revendications

1. Machine électrique formant actionneur ou générateur, comprenant une partie active à une ou plusieurs phases destinée à être reliée à une source ou à une charge électrique, et une partie passive, ces deux parties étant mobiles l'une par rapport à l'autre, la partie active comprenant un bobinage solénoïdal global (110, 210, 310) pour chaque phase et comprenant, à l'intérieur de ce ou ces bobinages, un empilage de parties ferromagnétiques ou amagnétiques (400) et de parties aimantées (500), les parties aimantées ayant des directions d'aimantation parallèles au sens de déplacement relatif et des sens d'aimantation opposés successivement l'un à l'autre, les parties ferromagnétiques ou amagnétiques de cet empilage étant munies de passages traversés chacun par au moins un élément en coulissement relatif (600) par rapport à la partie active, ce ou ces éléments coulissants constituant la partie passive, chaque élément coulissant incluant une succession de portions alternativement magnétiques (620) et amagnétiques (630) prévues pour se trouver les unes après les autres en vis à vis des différentes parties aimantées ou non de l'empilage, de sorte qu'un flux magnétique alternatif soit alors généré dans le bobinage de chaque phase, **caractérisé en ce que** les passages formés dans les parties ferromagnétiques ou amagnétiques de l'empilage forment des orifices dont la section interne entoure à chaque fois un élément coulissant, et **en ce que** les éléments coulissants (600) sont des tiges ayant chacune un pourtour externe complémentaire de la section interne des orifices traversés, de sorte que chaque tige (600) vient en interaction magnétique avec la partie ferromagnétique ou amagnétique traversée (500) par l'ensemble de son pourtour externe.

2. Machine selon la revendication 1, **caractérisée en ce que** les orifices sont de section circulaire et que chaque tige (600) présente la forme d'un cylindre de révolution.

3. Machine selon la revendication 2, **caractérisée en ce que** les tiges comprennent chacune au moins une rainure longitudinale.

4. Machine selon l'une quelconque des revendications précédentes, **caractérisée en ce que** les phases sont au nombre de q et sont décalées dans le sens du déplacement de la partie mobile d'une distance telle que leurs flux magnétiques respectifs soient déphasés de Nπ/q, N étant un entier.

5. Machine selon l'une quelconque des revendications précédentes, **caractérisée en ce que** chaque aimant (500) est constitué par un anneau entourant une tige (600) correspondante.

6. Machine selon l'une quelconque des revendications 1 à 4, **caractérisée en ce que** chaque aimant est constitué par une plaque aimantée perpendiculaire au déplacement (500), munie d'une série d'orifices, chaque orifice étant traversé par une tige (600) respective.

7. Machine selon l'une quelconque des revendications précédentes, **caractérisée en ce que** chaque tige est constituée par une âme centrale amagnétique et une série de bagues (620, 630) alternativement magnétiques et amagnétiques.

8. Machine selon l'une quelconque des revendications précédentes, **caractérisée en ce qu'**elle comporte un ou plusieurs capteurs de positionnement (800) de forme annulaire éventuellement fendue, comprenant un ou plusieurs bobinages, les capteurs étant solidaires de la partie active et traversés par une ou plusieurs des tiges (600) de la partie passive.

9. Machine selon l'une quelconque des revendications précédentes, **caractérisée en ce que** les capteurs de position (800) sont positionnés chacun autour d'une tige et décalés dans le sens du déplacement relatif des parties active et passive.

10. Machine selon l'une quelconque des revendications précédentes, **caractérisée en ce qu'**elle inclut au moins un organe (710, 720) de réception des efforts fournis par au moins une tige (600), cette tige (600) et cet organe coopérant selon un appui monodirectionnel dans le sens d'une traction de la tige, de sorte qu'aucune réaction de l'organe de réception n'est générée sur la tige dans le sens d'une compression de celle-ci.

11. Machine selon la revendication 10, **caractérisée en ce qu'**un jeu est ménagé sous l'appui entre tige (600) et organe de réception d'effort (710, 720).

12. Machine selon la revendication 10 ou la revendication 11, **caractérisée en ce que** l'organe de réception d'effort (710, 720) est une plaque transversale et solidaire d'un axe principal de la machine (700), et **en ce que** chaque tige (600) traverse cette plaque (710, 720) et présente chacune une tête d'appui (640,650) sur cette plaque (710, 720).

13. Machine selon l'une quelconque des revendications précédentes, **caractérisée en ce que** la ou les tiges (600) présentent une section dont la circonférence forme une ligne lisse sans rupture angulaire.

## Patentansprüche

1. Elektrische Maschine, einen Steller oder Generator bildend, die einen aktiven Abschnitt mit einer oder mehreren Phasen umfasst, die dazu bestimmt ist, mit einer Stromquelle oder einer elektrischen Ladung verbunden zu werden, und einen passiven Abschnitt, wobei diese beiden Abschnitte im Verhältnis zueinander bewegt werden können, wobei der aktive Abschnitt eine globale spulenartige Wicklung (110, 210, 310) für jede Phase umfasst, und im Inneren dieser Wicklung oder Wicklungen eine Stapelung von ferromagnetischen oder amagnetischen Abschnitten (400) und von magnetischen Abschnitten (500) umfasst, wobei die magnetischen Abschnitte Magnetisierungsrichtungen parallel zur relativen Bewegungsrichtung und der Reihe nach gegensätzliche Magnetisierungsrichtungen aufweist, wobei die ferromagnetischen oder amagnetischen Abschnitte dieser Stapelung mit Durchlässen versehen sind, von denen jeder durch zumindest ein im Verhältnis zum aktiven Abschnitt relativ gleitendes Element (600) durchquert wird, wobei dieses oder diese gleitenden Elemente den passiven Abschnitt darstellen, wobei jedes gleitende Element eine Aufeinanderfolge von abwechselnd magnetischen (620) und amagnetischen (630) Abschnitten enthält, die vorgesehen sind, um sich nacheinander gegenüber den verschiedenen magnetischen oder nicht magnetischen Abschnitten der Stapelung zu befinden, sodass ein Wechselmagnetfluss in der Wicklung einer jeden Phase erzeugt wird, **dadurch gekennzeichnet, dass** die in den ferromagnetischen oder amagnetischen Abschnitten gebildeten Durchlässe der Stapelung Öffnungen bilden, deren interner Querschnitt jedes Mal ein gleitendes Element umgibt, und dadurch, dass die gleitenden Elemente (600) Stäbe sind, die jeweils einen externen Umfang aufweisen, der ergänzend zum internen Querschnitt der durchquerten Öffnungen ist, sodass jeder Stab (600) in magnetische Wechselwirkung mit dem ferromagnetischen oder amagnetischen Abschnitt (500) gerät, der durch seinen gesamten externen Umfang durchquert wird.

2. Maschine nach Anspruch 1, **dadurch gekennzeichnet, dass** die Öffnungen einen kreisförmigen Querschnitt aufweisen und dass jeder Stab (600) die Form eines Drehzylinders aufweist.

3. Maschine nach Anspruch 2, **dadurch gekennzeichnet, dass** die Stäbe jeweils zumindest eine Längsnut umfassen.

4. Maschine nach einem der vorhergehenden Ansprüche, **dadurch gekennzeichnet, dass** die Anzahl der Phasen q ist, und sie in Bewegungsrichtung des mobilen Abschnitts um einen solchen Abstand versetzt sind, dass ihre jeweiligen Magnetflüsse um Nπ/q phasenverschoben sind, wobei N eine Ganzzahl ist.

5. Maschine nach einem der vorhergehenden Ansprüche, **dadurch gekennzeichnet, dass** jeder Magnet (500) durch einen Ring gebildet wird, der einen entsprechenden Stab (600) umgibt.

6. Maschine nach einem der Ansprüche 1 bis 4, **dadurch gekennzeichnet, dass** jeder Magnet durch eine magnetische Platte senkrecht zur Bewegung (500) gebildet wird, die mit einer Reihe von Öffnungen versehen ist, wobei jede Öffnung durch einen jeweiligen Stab (600) durchquert wird.

7. Maschine nach einem der vorhergehenden Ansprüche, **dadurch gekennzeichnet, dass** jeder Stab durch einen zentralen amagnetischen Kern und eine Reihe von abwechselnd magnetischen und amagnetischen Ringen (620, 630) gebildet wird.

8. Maschine nach einem der vorhergehenden Ansprüche, **dadurch gekennzeichnet, dass** sie einen oder mehrere Positioniersensoren (800) in einer eventuell geschlitzten Ringform umfasst, eine oder mehrere Wicklungen umfassend, wobei die Sensoren fest mit dem aktiven Abschnitt verbunden sind, und durch einen oder mehrere Stäbe (600) des passiven Abschnitts durchquert werden.

9. Maschine nach einem der vorhergehenden Ansprüche, **dadurch gekennzeichnet, dass** die Positionssensoren (800) jeweils um einen Stab positioniert sind und in der Bewegungsrichtung der aktiven und passiven Abschnitte zueinander versetzt sind.

10. Maschine nach einem der vorhergehenden Ansprüche, **dadurch gekennzeichnet, dass** sie zumindest ein Organ (710, 720) zur Aufnahme der Kräfte, die durch zumindest einen Stab (600) aufgebracht werden, enthält, wobei dieser Stab (600) und dieses Organ entsprechend einer Abstützung in eine Richtung, in die Richtung eines Zugs des Stabes zusammenwirken, sodass keine Reaktion des Organs zur Aufnahme auf den Stab in die Richtung einer Kompression desselben erzeugt wird.

11. Maschine nach Anspruch 10, **dadurch gekennzeichnet, dass** ein Spiel bei der Abstützung zwischen Stab (600) und Organ zur Aufnahme einer Kraft (710, 720) vorgesehen ist.

12. Maschine nach Anspruch 10 oder Anspruch 11, **dadurch gekennzeichnet, dass** das Organ zur Aufnahme einer Kraft (710, 720) eine querlaufende und fest mit einer Hauptachse der Maschine (700) verbundene Platte ist, und dadurch, dass jeder Stab (600) diese Platte (710, 720) durchquert und jeweils einen Abstützkopf (640, 650) auf dieser Platte (710, 720) aufweist.

13. Maschine nach einem der vorhergehenden Ansprüche, **dadurch gekennzeichnet, dass** der oder die Stäbe (600) einen Querschnitt aufweisen, dessen Umfang eine glatte Linie ohne Winkelunterbrechung bildet.

## Claims

1. Electric machine acting as an actuator or generator, comprising an active part with one or a plurality of phases intended to be connected to a source or to a current load, and a passive part, these two parts being movable relative to one another, the active part comprising an overall solenoid coil (110, 210, 310) for each phase and comprising, inside this or these coils, a stack of ferromagnetic or non-magnetic parts (400) and magnetised parts (500), the magnetised parts having parallel magnetisation directions in the direction of relative movement and successively opposing magnetisation directions with one another, the ferromagnetic or non-magnetic parts of this stack being provided with passages each traversed by at least one relative sliding element (600) with respect to the active part, the or these sliding elements forming the passive part, each sliding element including a succession of alternating magnetic (620) and non-magnetic (630) portions envisaged to be situated one after the other facing the various optionally magnetised parts of the stack, such that an alternating magnetic flux is then generated in the coil of each phase, **characterised in that** the passages formed in the ferromagnetic or non-magnetic parts of the stack form orifices wherein the inner cross-section surrounds a sliding element each time, and **in that** the sliding elements (600) are rods each having an outer periphery complementary with the internal cross-section of the orifices traversed, such that each rod (600) interacts magnetically with the ferromagnetic or non-magnetic part traversed (500) by the entire outer periphery thereof.

2. Machine according to claim 1, **characterised in that** the orifices have a circular cross-section and that each rod (600) has the shape of a cylinder of revolution.

3. Machine according to claim 2, **characterised in that** the rods each comprise at least one longitudinal groove.

4. Machine according to any one of the preceding claims, **characterised in that** the phases are of a number q and are offset in the direction of movement of the movable part by a distance such that the respective magnetic fluxes thereof are out-of-phase by Nπ/q, where N is an integer.

5. Machine according to any one of the preceding claims, **characterised in that** each magnet (500) consists of a ring surrounding a corresponding rod (600).

6. Machine according to any one of claims 1 to 4, **characterised in that** each magnet consists of a magnetised plate perpendicular to the movement (500), provided with a series of orifices, each orifice being traversed by a respective rod (600).

7. Machine according to any one of the preceding claims, **characterised in that** each rod consists of a non-magnetic central core and a series of alternating magnetic and non-magnetic rings (620, 630).

8. Machine according to any one of the preceding claims, **characterised in that** it includes one or a plurality of positioning sensors (800) of optionally slotted annular shape, comprising one or a plurality of coils, the sensors being rigidly connected to the active part and traversed by one or a plurality of the rods (600) of the passive part.

9. Machine according to any one of the preceding claims, **characterised in that** the position sensors (800) are each positioned around a rod and offset in the direction of relative movement of the active and passive parts.

10. Machine according to any one of the preceding claims, **characterised in that** it includes at least one member (710, 720) for receiving loads provided by at least one rod (600), this rod (600) and this member engaging along a monodirectional support in the direction of rod traction, such that no reaction of the receiving member is generated on the rod in the direction of compression thereof.

11. Machine according to claim 10, **characterised in that** a gap is provided below the support between the rod (600) and load receiving member (710, 720).

12. Machine according to claim 10 or claim 11, **characterised in that** the load receiving member (710, 720) is a transverse plate and rigidly connected to a main shaft of the machine (700), and **in that** each rod (600) traverses this plate (710, 720) and each has a support head (640, 650) on this plate (710, 720).

13. Machine according to any one of the preceding claims, **characterised in that** the rod(s) (600) have a cross-section wherein the circumference forms a smooth line with no angular interruption.
